# EUROPEAN PATENT SPECIFICATION

(11) **EP 2 911 268 B1**
(45) Date of publication and mention of the grant of the patent: **06.09.2017**
(21) Application number: 15152966.6
(22) Date of filing: 29.01.2015
(51) Int. Cl.: H02J 7/00

(54) **Charger holder**
Ladegeräthalter
Support de chargeur

(30) Priority: 21.02.2014 JP 2014031827
(43) Date of publication of application: 26.08.2015
(73) Proprietor: Hosiden Corporation, Yao-shi, Osaka 581-0071 (JP)
(72) Inventor: Todoroki, Masakazu, OSAKA, Osaka 5810071 (JP); Kawase, Yuki, OSAKA, Osaka 5810071 (JP); Nagasawa, Masahiko, OSAKA, Osaka 5810071 (JP)
(74) Representative: Lemcke, Brommer & Partner Patentanwälte Partnerschaft mbB

(56) References cited:
- WO-A1-2006/078182
- US-A1- 2004 150 944
- US-B1- 6 538 341

## Description

### Technical Field

This disclosure relates to a charger holder for supporting a personal digital assistant (PDA) when a battery included therein is to be charged.

### Related

Conventionally, charging of a rechargeable battery included in a PDA has been effected with a DC power. Such DC power can be supplied via a so-called AC adaptor (an example of what is referred to as "a voltage converter" in the context of the present invention) or an output port (e.g. a USB port) provided in a computer for outputting a DC power. Since charging with such DC power is time-consuming, a technique for shortening this period is being currently contemplated. As some examples of the technique of this kind, there are, e.g. "IT Media Professional Mobile: revised 2013, Feb. 21, 18:06) (internet<URL: http://www.itmedia.co.jp/promobile/articles/1302/21/news099.html> (searched on Feb. 6, 2014) and "Engadget JP, 2013, Feb. 26, 09:01) (internet<URL: http://japanese.engadget.com/2013/02/25/snapdragon-800-75/> (searched on Feb. 6, 2014).

Further, US 2004/0150944 A1 discloses a docking station used with portable electronic devices, such as digital cameras.

### Summary

According to the techniques disclosed in "IT Media Professional Mobile: revised 2013, Feb. 21, 18:06" and "Engadget JP, 2013, Feb. 26, 09:01", in charging a rechargeable battery of a PDA, the techniques require an AC adaptor adapted for quick charging as well as implementation of a predetermined control for the AC adaptor from the side of a device such as an instrument connected to this AC adaptor or the PDA. Moreover, with repeated attachment and detachment between a charging connector of the PDA and a terminal of the AC adaptor, damage of the charging connector and/or deterioration in water-proof performance of the charging connector portion can occur also. Then, it is conceivable to support the PDA by a charger holder and to effect charging with placing terminal electrodes of the charger holder in contact with electrode portions exposedly provided in the PDA. However, with conventionally employed charger holders, it is not possible to control the AC adaptors described in "IT Media Professional Mobile: revised 2013, Feb. 21, 18:06" and "Engadget JP, 2013, Feb. 26, 09:01", so quick charging of the rechargeable battery is not possible.

Embodiments of the present invention relate to a charger holder supporting a personal digital assistant when a rechargeable battery included in the personal digital assistant is to be charged quickly. The preferred embodiment is set out in the independent claim 1. With a voltage converter employed for quick charging, prior to the above-described control, the converter outputs a DC power comprised of an output voltage lower than an output voltage used for the quick charging. In order to cause this voltage converter to output the DC power for quick charging, it is necessary to effect, from the side of a device connected to the voltage converter, setting of an output voltage suitable for the quick charging. In this, in the above-described embodiment, control needed for such setting of an output voltage to the voltage converter is effected by the voltage value instructing section included in the charger holder, so that quick charging of a rechargeable battery of a personal digital assistant (PDA) is made possible only by attaching the PDA to this charger holder.

In this case, it is readily possible to determine whether a voltage converter connected to the charger holder is adapted for quick charging or not, that is, whether the voltage converter can set the output voltage or not. Therefore, if it is determined that the voltage converter connected to the charger holder allows setting of the output voltage, then, by setting the output voltage to a higher voltage, quick charging of the rechargeable battery of the PDA is made possible.

Further, the voltage value instructing section can be configured such that a voltage value to be instructed to the voltage converter is set by a switch mechanism.

In this case, it is readily possible to set the voltage value to be instructed to the voltage converter. Therefore, if this voltage to be instructed is set in advance at the time of manufacture at the shipping site, manufacturing cost relating to such setting can be reduced. Further, in case a user setting thereof is allowed, a user can readily change it if desired.

According to a further possible configuration, a supporting section for supporting the personal digital assistant is attached to a housing including the power source connecting section and the terminal connecting section; and
the voltage value to be instructed to the voltage converter is set in response to an operation of the switch mechanism by a switch operating section provided in the supporting portion, when this supporting section is attached to the housing.

In this case, only by attaching the supporting section to the housing, setting of an output voltage of the voltage converter suitable for charging of the rechargeable battery included in the PDA is made possible. Therefore, simply with attachment of a supporting section suitable for the PDA to the housing, a charger holder suitable for this PDA can be configured. As a result, through common (shared) use of the housing, the manufacturing costs can be reduced.

According to a still further possible configuration, the charger holder further comprises a receiving section receiving charging voltage information transmitted from the personal digital assistant and indicating a charging voltage corresponding to this personal digital assistant; and
the voltage value instructing section sets a voltage value to be instructed to the voltage converter based on the charging voltage information.

In this case, the output voltage of the voltage converter can be set in a wireless manner from the personal digital assistant to the charger holder.

### Brief Description of the Drawings

Fig. 1 is a block diagram showing a general construction of functional sections effecting charging control,
Fig. 2 is a view showing one example of output voltages set by a switch mechanism,
Fig. 3 is a perspective view of a charger holder,
Fig. 4 is a side view of the charger holder with a housing being shown transparent, and
Fig. 5 is a flowchart relating to a charging control by the charger holder.

### Description of Embodiments

A charger holder relating to this disclosure is configured to be capable of quick charging of a rechargeable battery included in a personal digital assistant (PDA) when a voltage converter adapted for quick charging is employed. Next, a charger holder 100 according to the present embodiment will be described.

The charger holder 100 supports (holds) a PDA (a portable digital assistant) 200 when a rechargeable battery 201 included in this PDA 200 is to be charged. Here, the PDA 200 refers to a mobile terminal device which can be carried by a user, such as a smart phone, a tablet computer, etc. Such PDA 200 incorporates therein the rechargeable battery 201 to allow its use by a user during his/her transportation also. The charger holder 100 supports the PDA 200 when this rechargeable battery 201 is to be charged.

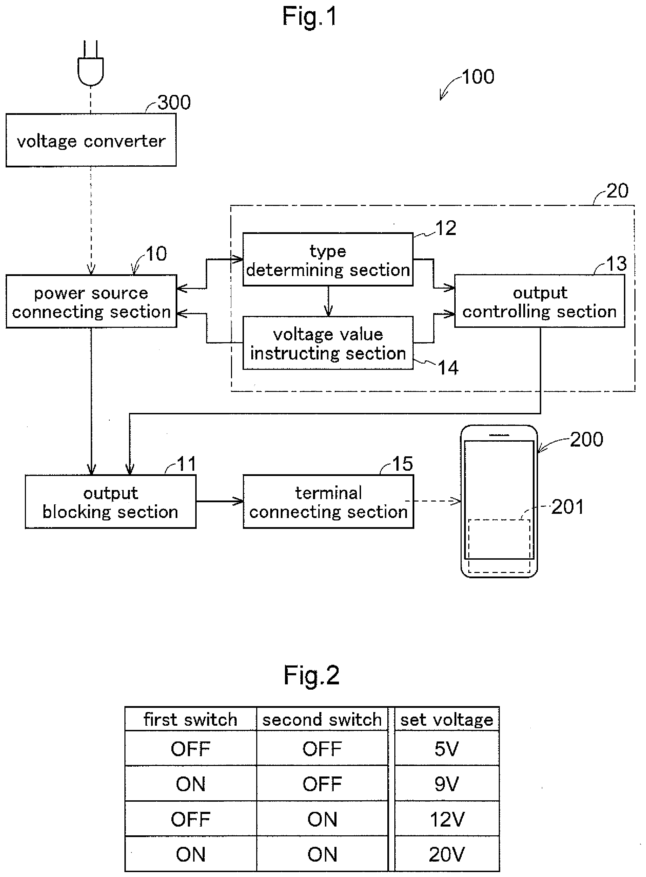

Fig. 1 shows a block diagram showing functional sections provided in the charger holder 100 relating to this embodiment. Namely, the charger holder 100 includes a power source connecting section 10, an output blocking section 11, a type determining section 12, an output controlling section 13, a voltage value instructing section 14, and a terminal connecting section 15. In particular, the respective functional sections of the type determining section 12, the output controlling section 13 and the voltage value instructing section 14 for effecting various operations relating to charging of the battery 201 included in the PDA 200 are comprised of hardware and/or software. In the instant embodiment, the type determining section 12, the output controlling section 13 and the voltage value instructing section 14 are comprised of a microcomputer 20.

To the power source connecting section 10, a voltage converter 300 capable of varying a voltage value of an output voltage is connected. In the instant embodiment, the voltage converter 300 corresponds to a so-called AC adaptor inputting an AC power such as a commercial power source and outputting a DC power. This voltage converter 300 is configured to be able to allow setting of a higher output voltage than possible with the AC adaptor conventionally employed in charging the rechargeable battery 201, so as to realize charging of the rechargeable battery 200 in a shorter period of time (quick charging). Incidentally, the power source connecting section 10 allows connection thereto of also a conventional voltage converter incapable of quick charging (a voltage converter which does not allow setting of a high output voltage).

With the voltage converter 300 for use in quick charging, immediately after input of AC power thereto, the converter 300 outputs a DC power comprised of an output voltage (this will be referred to as the "initial voltage" hereinafter) lower than the output voltage used for the quick charging. Therefore, to the charger holder 100, there is applied this initial voltage via the power source connecting section 10. At this point, the DC power applied via the power source connecting section 10 is blocked by the output blocking section 11 so that this power is not directly outputted from the charger holder 100 to the rechargeable battery 201 of the PDA 200.

The output blocking section 11 employs a device for blocking output such as a load switch. Specifically, this can be comprised of a normally-opened P type MOS-FET (Metal Oxide Semiconductor-Field Effect Transistor). In this case, the source terminal of this P type MOS-FET may be connected to the power source connecting section 10 and its drain terminal may be connected to the terminal connecting section 15 and its gate terminal may be connected to the output controlling section 13. Further, in order to keep the P type MOS-FET under an opened state reliably in the absence of any control signal from the output controlling section 13, the source terminal and the gate terminal can be connected via a resistor having a predetermined resistance. Incidentally, the output blocking section 11 can be configured with using any other device than the P type MOS-FET.

Here, the power source connecting section 10 includes a positive power terminal, a negative power terminal and a pair of signal terminals. The negative power terminal is connected to a base potential of the power converter 300 and the positive terminal is impressed with a DC voltage greater than the base potential from the voltage converter 300. The pair of signal terminals are utilized for transmitting/receiving signals in the differential transmission technique. In the instant embodiment, the voltage converter 300 too includes a pair of signal terminals, and a pair of signal terminals of the charger holder 100 are connected respectively to the pair of signal terminals of the voltage converter 300.

With only establishment of connection of the voltage converter 300 to the charger holder 100, the connected voltage converter 300 will not set (change) its output voltage, so that the voltage converter 300 will not yet be recognized as being capable of quick charging. Thus, the type determining section 12 transmits, via its signal terminal, a determination signal to the voltage converter 300 and determines whether the device connected to the power source connecting section 10 can be the voltage converter 300 or not. More particularly, a predetermined voltage will be outputted to one of the pair of signal terminals, and if a predetermined voltage is detected from the other of the pair of signal terminals according to this output, then, it is determined that the device connected to the power source connecting section 10 can be the voltage converter 300. On the other hand, after output of the predetermined voltage to one of the pair of signal terminals, if the predetermined voltage is not detected from the other of the pair of signal terminals, then, it is determined that the device connected to the power source connecting section 10 is not the voltage converter 300.

When the type determining section 12 determines that the device connected to the power source connecting section 10 can be the voltage converter 300, the type determining section 12 further transmits determination signals via the pair of signal terminals to the voltage converter 300 and then determines the type of the voltage converter 300 based on a response from this voltage converter 300 according to the determination signal. Here, the type determination of the voltage converter 300 means determination of whether the voltage converter 300 connected to the power source connecting section 10 is a voltage converter 300 capable of setting (changing) its output voltage or not. The type determining section 12 outputs a predetermined voltage to one of the pair of signal terminal under preset conditions. Here, the language "preset conditions" means conditions specifying a period of outputting the voltage and its voltage value. Such conditions are preset by the specification of the voltage converter 300. If the voltage converter 300 is adapted for quick charging, it is arranged such that when a predetermined voltage corresponding to this condition is inputted to one of the pair of signal terminals, no voltage is returned to the other of the pair of signal terminals. Therefore, the type determining section 12 outputs a predetermined voltage and in the absence of any response, the section 12 determines that the voltage converter 300 connected to the power source connecting section 10 is the voltage converter 300 adapted for quick charging. In this case, the type determining section 12 transmits the result of this determination to the voltage value instructing section 14. Further, in this case, supply of the initial voltage from the voltage converter 300 will be stopped. On the other hand, the type determining section 12 outputs the predetermined voltage and in the presence of a response, the section 12 determines that the voltage converter 300 connected to the power source connecting section 10 is a voltage converter 300 which does not allow setting (changing) of the output voltage. In this case, the type determining section 12 transmits the result of this determination to the output controlling section 13.

The output controlling section 13, upon receipt of the determination result from the type determining section 12, renders the P type MOS-FET as the output blocking section 11 into a closed state. With this, from the power source connecting section 10 via the output blocking section 11, a DC power is transmitted to the terminal connecting section 15. This DC power is a power relating to the above-described initial voltage.

The voltage value instructing section 14 instructs to the voltage converter 300, a voltage value of the output voltage to be outputted from this voltage converter 300. The voltage value instructing section 14 sets a voltage value to be instructed to the voltage converter 300, based on the determination result of the type determining section 12. More particularly, the voltage value instructing section 14 instructs the above-described voltage value if the type determining section 12 determines that the device connected to the power source connecting section 10 is a voltage converter 300 adapted for quick charging. This instruction is effected via a pair of connecting terminals included in the power source connecting section 10.

The voltage value instructing section 14, after instructing a voltage value to the voltage converter 300 via the power source connecting section 10, renders the P type MOS-FET as the output blocking section 11 into the closed state. With this, a DC power from the power source connecting section 10 via the output blocking section 11 is transmitted to the terminal connecting section 15, and this DC power is the power relating to the DC voltage instructed by the voltage value instructing section 14.

To the terminal connecting section 15, there is connected a PDA (portable digital assistant) 200 supplying a DC power from the voltage converter 300 according to an instruction from the voltage value instructing section 14. Here, a DC power from the voltage converter 300 according to an instruction from the voltage value instructing section 14 means an output from the voltage converter 300 which is supplied to the charger holder 100 via the power source connecting section 10 and which is according to the voltage value instructed by the voltage value instructing section 14. Therefore, from the terminal connecting section 15 to the PDA 200, there is supplied an output of the voltage converter 300 which output is according to the voltage value instructed by the voltage value instructing section 14, and with this output, a rechargeable battery 201 included in the PDA 200 is charged.

Incidentally, in case a DC power based on the initial voltage is transmitted to the terminal connecting section 15, from the terminal connecting section 15 to the PDA 200, an output of the voltage converter 300 according to this initial voltage is supplied and with this output, the rechargeable battery 201 included in the PDA 200 is charged.

In the instant embodiment, in the voltage value instructing section 14, a voltage value to be instructed to the voltage converter 300 is set by the switch mechanism 60. More particularly, the voltage value instructing section 14 includes the switch mechanism 60; and according to a state of this switch mechanism 60, the voltage value will be set. In the instant embodiment, the switch mechanism 60 is comprised of two push switches which can be switched between two states of "depressed state" and "undepressed state". Therefore, with these two push switches, four different states can be indicated. And, in accordance with these four different states, voltage values to be instructed to the voltage converter 300 are set.

An example of voltage values (to be referred to as "set voltages" hereinafter) set by the two push switches to be instructed to the voltage converter 300 are shown in Fig. 2. Supping the two push switches consist of a first switch 61 and a second switch 62, in case both the first switch 61 and the second switch 62 are OFF, the set voltage is "5V". In case the first switch 61 is ON and the second switch 62 is OFF, the set voltage is "9V". Further, in case the first switch 61 is OFF and the second switch 62 is ON, the set voltage is "12V". And, both the first switch 61 and the second switch 62 are ON, the set voltage is "20V".

The set voltages described above can be set in a manner as follows for instance.

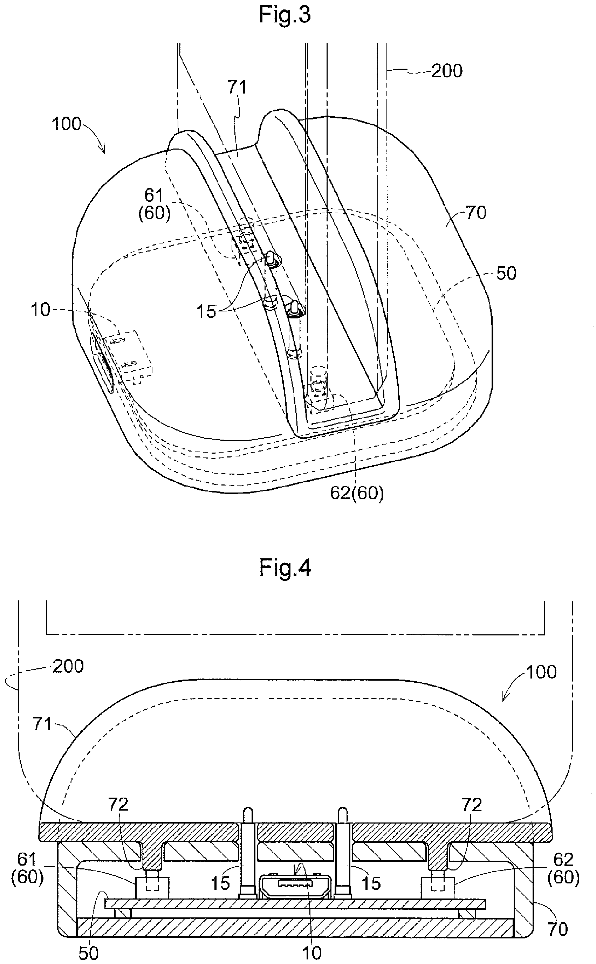

Here, Fig. 3 shows a perspective view of the charger holder 100. Fig. 4 shows a side view of the charger holder 100 (with the housing 70 being shown as being transparent). As shown in Fig. 3 and Fig. 4, the charger holder 100 mounts, on a substrate 50, a USB port as the power source connecting section 10, the terminal connecting section 15, the first switch 61, and the second switch 62. Further, though not shown, the respective functional sections of the output blocking section 11, the type determining section 12, the output controlling section 13, the voltage value instructing section 14, and the terminal connecting section 15 are also mounted on the substrate 50. The substrate 50 is accommodated in the housing 70. Thus, in the housing 70, the power source connecting section 10 and the terminal connecting section 15 are provided.

Further, to the housing 70, there is attached a supporting section 71 for supporting the PDA 200. Here, the language "supporting the PDA 200" means that the PDA 200 having the rechargeable battery 201 to be charged via the charger holder 100 is supported so as not to be inadvertently detached from the charger holder 100 during charging. For instance, in the present embodiment, the supporting section 71 is configured to clamp the PDA 200, with the terminal connecting section 15 and the PDA 200 being electrically connected to each other.

On the back face of the supporting section 71, there are provided switch operating sections 72 for operating the switch mechanism 60. In the instant embodiment, since the two switches, i.e. the first switch 61 and the second switch 62, are provided as the switch mechanism 60, there are provided two such switch operating sections 72. The switch operating sections 72 are provided at positions where the first switch 61 and the second switch 62 can be depressed when the supporting section71 is attached to the housing 70. With this, when the supporting section 71 is attached to the housing 70, the switch mechanism 60 will be operated by the switch operating sections 72, thus setting a voltage value to be instructed to the voltage converter 300.

For instance, if the set voltage is "5V", as shown in Fig. 2, both the first switch 61 and the second switch 62 are OFF. Therefore, the switch operating sections 72 are provided with a length so as not to depress the first switch 61 and the second switch 62 when the supporting section 71 is attached to the housing 70. In case the set voltage is "9V", as shown in Fig. 2, the first switch 61 is ON and the second switch 62 is OFF, so that an arrangement is made such that the switch operating sections 72 will depress only the first switch 61 when the supporting section 71 is attached to the housing 70. In case the set voltage is "12V", as shown in Fig. 2, the first switch 61 is OFF and the second switch 62 is ON, so that an arrangement is made such that the switch operating sections 72 will depress only the second switch 62 when the supporting section 71 is attached to the housing 70. In case the set voltage is "20V", both the first switch 61 and the second switch 62 are ON, as shown in Fig. 2, an arrangement is made such that the switch operating sections 72 will depress both the first switch 61 and the second switch 62 when the supporting section 71 is attached to the hosing 70. With these, only with attachment of the supporting section 71 to the housing 70, the set voltage can be set automatically. Further, by configuring the supporting portion 71 according to the types of the PDA 200, it becomes also possible to employ commonly the configuration other than the supporting section 71.

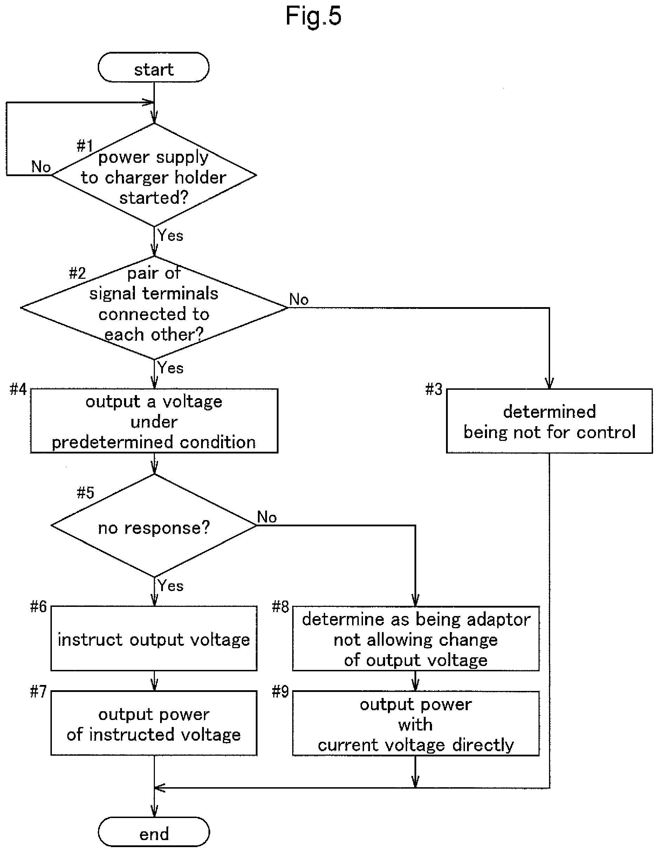

Next, the operations by the charger holder 100 will be explained with reference to the flowchart in Fig. 5. Upon initiation of power supply to the charger holder 100 (step #1: Yes), the type determining section 12 determines whether the pair of terminals of the voltage converter 300 are connected to each other via the power source connecting section 10 (step #2). This determination is effected by outputting a predetermined voltage to one of the pair of signal terminals of the power source connecting section 10 and determining whether the predetermined voltage is detected at the other of the pair of signal terminals within a predetermined period or not.

If the predetermined voltage is not detected at the other of the pair of signal terminals within the predetermined period (step #2: No), then, it is determined that the device connected to the power source connecting section 10 is not to be subjected to the control (step #3) and the process is terminated.

If the predetermined voltage is detected at the other of the pair of signal terminals within the predetermined period (step #2: Yes), then, the process goes on to determine the type of the device connected to the power source connecting section 10. Specifically, the process checks whether the device is a voltage converter 300 which allows change of output voltage or not. This determination is effected by outputting a voltage under a predetermined condition to the voltage converter 300 (step #4) and determining presence/absence of a response therefrom.

In the case of absence of any response (step #5: Yes), this means that the device is a voltage converter 300 which allows change of output voltage, so the voltage value instructing section 14 instructs an output voltage to the voltage converter 300 via the pair of signal terminals (step #6). In accordance with this instruction, a predetermined output is supplied from the voltage converter 300 to the charger holder 100. The voltage value instructing section 14 instructs the output controlling section 13 to render the output blocking section 11 into the closed state, whereby the output blocking section 11 is rendered into the closed state. With this, power relating to the voltage instructed by the voltage value instructing section 14 is outputted from the terminal connecting section 15 (step #7).

In the case of presence of response at step #5 (step #5: No), the type determining section 12 determines that the device at issue is a voltage converter 300 that does not allow change of output voltage (step #8). Thus, the voltage value instructing section 14 instructs the output controlling section 13 to render the output blocking section 11 into the closed state, whereby the output blocking section 11 is rendered into the closed state. With this, power relating to the voltage originally (initially) supplied to the charger holder 100 is outputted from the terminal connecting section 15 (step #9).

As described above, the charger holder 100 determines whether a device connected to the power source connecting section 10 is the voltage converter 300 or not and further determines whether the voltage converter 300 is the type adapted for quick charging or not, thus allowing charging of the rechargeable battery 201 of the PDA 200.

### [Other Embodiments]

In the foregoing embodiment, it was explained that the charger holder 100 includes the type determining section 12 for determining the type of the voltage converter 300. However, in case the type of the voltage converter 300 to be connected to the charger holder 100 is known in advance, a configuration omitting the type determining section 12 is also possible.

In the foregoing embodiment, it was explained that in the voltage value instructing section 14, a voltage value to be instructed to the voltage converter 300 is set by the switch mechanism 60. Instead, it is also possible to configure the voltage value instructing section 14 to set the voltage value to be instructed to the voltage converter 300 based on charging voltage information. The charging voltage information is information indicative of charging voltage according to the PDA 200, and this charging voltage information can be configured to be transmitted wirelessly from the PDA 200. To this end, the charger holder 100 can be provided with a receiving section for receiving the charging voltage information.

In the foregoing embodiment, it was explained that the voltage value to be instructed to the voltage converter 300 is set in response to an operation of the switch mechanism 60 by the switch operating sections 72 provided in the supporting section 71 when the supporting section 71 is attached to the housing 70. Instead, it is also possible to configure that the above voltage value is set by a user's operation of the switch mechanism 60.

In the foregoing embodiment, it was explained that the voltage converter 300 is a so-called AC adaptor. Instead, this can be a DC/DC converter configured to convert a predetermined DC voltage into a desired DC voltage.

This disclosure can be used for a charger holder holding a PDA when a rechargeable battery included in this PDA is to be charged.

## Claims

1. A charger holder (100) supporting a personal digital assistant (200) when a rechargeable battery (201) included in the personal digital assistant (200) is to be charged,
**characterized by**
a power source connecting section (10) to which a voltage converter (300) capable of varying a voltage value of an output voltage is connected and which transmits a determination signal to the voltage converter (300) via a signal terminal connected to the voltage converter (300);
a type determining section (12) determining a type of the voltage converter (300) in accordance with a response from the voltage converter (300) according to the determination signal;
a voltage value instructing section (14) instructing a voltage value of the output voltage to the voltage converter (300) based on determination result of the type determining section (12); and
a terminal connecting section (15) to which the personal digital assistant (200) is connected for receiving a DC power from the voltage converter (300) according to an instruction from the voltage value instructing section (14).

2. The charger holder (100) according to claim 1,
**characterized in that**
the voltage value instructing section (14) is configured such that a voltage value to be instructed to the voltage converter (300) is set by a switch mechanism (60).

3. The charger holder (100) according to claim 2,
**characterized in that**
a supporting section (71) for supporting the personal digital assistant (200) is attached to a housing (70) including the power source connecting section (10) and the terminal connecting section (15); and
the voltage value to be instructed to the voltage converter (300) is set in response to an operation of the switch mechanism (60) by a switch operating section (72) provided in the supporting portion (71), when this supporting section (71) is attached to the housing (70).

4. The charger holder (100) according to claim 1,
**characterized in that**
the charger holder (100) further comprises a receiving section receiving charging voltage information transmitted from the personal digital assistant (200) and indicating a charging voltage corresponding to this personal digital assistant (200); and
the voltage value instructing section (14) sets a voltage value to be instructed to the voltage converter (300) based on the charging voltage information.

## Patentansprüche

1. Ladegerät-Halterung (100), die einen Personal Digital Assistant (200) hält, wenn eine wieder aufladbare Batterie (201), die in dem Personal Digital Assistant (200) enthalten ist, geladen werden soll,
**gekennzeichnet durch**
einen Stromquellen-Anschlussteil (10), an den ein Spannungswandler (300), der in der Lage ist, einen Spannungswert einer Ausgangsspannung zu verändern, angeschlossen ist, und der über einen mit dem Spannungswandler (300) verbundenen Signalanschluss ein Bestimmungssignal an den Spannungswandler (300) sendet;
einen Typen-Bestimmungsteil (12), der entsprechend einer Rückmeldung des Spannungswandlers (300) gemäß dem Bestimmungssignal einen Typ des Spannungswandlers (300) bestimmt;
einen Spannungswert-Anweisungsteil (14), der dem Spannungswandler (300) auf Basis eines Bestimmungsresultats des Typen-Bestimmungsteils (12) einen Spannungswert der Ausgangsspannung anweist; und
ein Anschluss-Verbindungsteil (15), mit dem der Personal Digital Assistant (200) verbunden wird, um vom Spannungswandler (300) entsprechend einer Anweisung vom Spannungswert-Anweisungsteil (14) Gleichstrom zu erhalten.

2. Ladegerät-Halterung (100) nach Anspruch 1,
**dadurch gekennzeichnet, dass**
der Spannungswert-Anweisungsteil (14) so konfiguriert ist, dass ein Spannungswert, der dem Spannungswandler (300) angewiesen werden soll, mittels eines Schaltmechanismus (60) eingestellt wird.

3. Ladegerät-Halterung (100) nach Anspruch 2,
**dadurch gekennzeichnet, dass**
ein Halterungsteil (71) zum Halten des Personal Digital Assistant (200) an einem Gehäuse (70), das den Stromquellen-Anschlussteil (10) und den Anschluss-Verbindungsteil (15) enthält, angebracht ist; und
der Spannungswert, der dem Spannungswandler (300) angewiesen werden soll, in Reaktion auf eine Betätigung des Schaltmechanismus (60) durch einen SchalterBetätigungsteil (72), der in dem Halterungsteil (71) angeordnet ist, eingestellt wird, wenn dieses Halterungsteil (71) an dem Gehäuse (70) angebracht ist.

4. Ladegerät-Halterung (100) nach Anspruch 1,
**dadurch gekennzeichnet, dass**
die Ladegerät-Halterung (100) außerdem einen Empfangsteil aufweist, der eine vom Personal Digital Assistant (200) gesendete Ladespannungs-Information empfängt und eine diesem Personal Digital Assistant (200) entsprechende Ladespannung anzeigt; und
der Spannungswert-Anweisungsteil (14) einen Spannungswert, der dem Spannungswandler (300) basierend auf der Ladespannungs-Information angewiesen werden soll, festlegt.

## Revendications

1. Support de chargeur (100) supportant un assistant numérique personnel (200) lorsqu'une batterie rechargeable (201) incluse dans l'assistant numérique personnel (200) doit être chargée,
**caractérisé par**
une section de connexion de source d'alimentation (10) à laquelle est connecté un convertisseur de tension (300) capable de faire varier une valeur de tension d'une tension de sortie et qui transmet un signal de détermination au convertisseur de tension (300) par l'intermédiaire d'une borne de signal connectée au convertisseur de tension (300) ;
une section de détermination de type (12) qui détermine un type du convertisseur de tension (300) en fonction d'une réponse du convertisseur de tension (300) en fonction du signal de détermination ;
une section d'instruction de valeur de tension (14) qui instruit une valeur de tension de la tension de sortie au convertisseur de tension (300) sur la base du résultat de détermination de la section de détermination de type (12) ; et
une section de connexion de terminal (15) à laquelle l'assistant numérique personnel (200) est connecté pour recevoir une alimentation en courant continu du convertisseur de tension (300) en fonction d'une instruction provenant de la section d'instruction de valeur de tension (14).

2. Support de chargeur (100) selon la revendication 1,
**caractérisé en ce**
**que** la section d'instruction de valeur de tension (14) est configurée de sorte qu'une valeur de tension à instruire au convertisseur de tension (300) soit réglée par un mécanisme à commutateur (60).

3. Support de chargeur (100) selon la revendication 2,
**caractérisé en ce**
**qu'**une section de support (71) pour supporter l'assistant numérique personnel (200) est fixée à un boîtier (70) incluant la section de connexion de source d'alimentation (10) et la section de connexion de terminal (15) ; et
**que** la valeur de tension à instruire au convertisseur de tension (300) est réglée en réponse à un actionnement du mécanisme à commutateur (60) par une section d'actionnement de commutateur (72) prévue dans la section de support (71) lorsque cette section de support (71) est fixée au boîtier (70).

4. Support de chargeur (100) selon la revendication 1,
**caractérisé en ce**
**que** le support de chargeur (100) comprend en outre une section de réception recevant des informations de tension de charge transmises par l'assistant numérique personnel (200) et indiquant une tension de charge correspondant à cet assistant numérique personnel (200) ; et
la section d'instruction de valeur de tension (14) règle une valeur de tension à instruire au convertisseur de tension (300) sur la base des informations de tension de charge.
